# EUROPEAN PATENT SPECIFICATION

(11) **EP 4 438 406 B1**
(45) Date of publication and mention of the grant of the patent: **15.04.2026**
(21) Application number: 23828662.9
(22) Date of filing: 26.05.2023
(51) Int. Cl.: B60P 7/08, B60P 9/00, B62D 63/02

(54) **TRANSFER DEVICE**
TRANSFERVORRICHTUNG
DISPOSITIF DE TRANSFERT

(30) Priority: 28.01.2023 CN 202320153750 U
(43) Date of publication of application: 02.10.2024
(73) Proprietor: Contemporary Amperex Technology (Hong Kong) Limited, Central, Central And Western District (HK)
(72) Inventor: XIA, Yijun, Ningde, Fujian 352100 (CN); SUN, Yanlin, Ningde, Fujian 352100 (CN); YU, Chenqin, Ningde, Fujian 352100 (CN); NI, Dawei, Ningde, Fujian 352100 (CN)
(74) Representative: Gong, Jinping
(86) International application number: PCT/CN2023/096539
(87) International publication number: WO 2024/156168

(56) References cited:
- CN-A- 107 323 990
- CN-A- 107 323 990
- CN-A- 110 937 390
- CN-A- 111 959 370
- CN-A- 112 794 072
- CN-A- 112 794 072
- CN-A- 113 581 324
- CN-U- 211 107 141
- CN-U- 211 107 141
- CN-U- 214 420 584
- CN-U- 214 420 584

## Description

The present application claims the benefit of priority to Chinese patent application no. 202320153750.7, filed on January 28, 2023 and entitled "TRANSFER DEVICE".

### Technical Field

The present application relates to the technical field of transfer apparatuses, and particularly relates to a transfer device as specified in any of claims 1-11.

### Background Art

This part provides merely background information related to the present disclosure, which is not necessarily the prior art.

At present, a semi-automatic apparatus is mainly used on a battery production line to process, assemble, transmit and detect batteries. In the related art, on the battery production line, battery components in a previous procedure are transferred to a next procedure by a transfer device and then are assembled. However, as each transfer device is only suitable for battery components with the same specifications and dimensions and cannot automatically adapt to products of different sizes, it is required to manually change the transfer device for changeover of products, resulting in low production efficiency. Examples are shown in CN107323990A, CN214420584U, CN211107141U, CN113581324A, CN111959370A and CN112794072A. a

### Summary of the Invention

The claimed subj ect-matter is defined by the appended claims. An objective of the present application is to provide a transfer device, which is configured to automatically adapt to pieces-to-be-transferred having different specifications and sizes, and is conducive to improvement in production efficiency during changeover.

The present application provides a transfer device. The transfer device includes: an automated guided vehicle, which is provided with a supporting frame; a positioning platform, which is arranged on the supporting frame; and a positioning transmission mechanism, which includes a first locking assembly, a second locking assembly, and a first driving assembly connected to the first locking assembly and the second locking assembly, where the first locking assembly and the second locking assembly are arranged on two opposite sides of the positioning platform at an interval in a first direction in a horizontal plane, and the first driving assembly is configured to drive the first locking assembly and the second locking assembly to move toward or away from each other, such that the first locking assembly and the second locking assembly cooperate to fix a piece-to-be-transferred. The first driving assembly includes: a first driving member; and a first transmission assembly, which is connected to the first driving member and is connected to the first locking assembly and the second locking assembly, respectively, where the first driving member is configured to drive the first transmission assembly to move, so as to drive the first locking assembly and the second locking assembly to move toward or away from each other. The first transmission assembly includes: a first lead screw, which is connected to the first driving member, where the first lead screw extends in the first direction, two ends of the first lead screw are provided with a first thread and a second thread, respectively, and the first thread and the second thread are arranged in opposite directions; and a first spiral transmission member and a second spiral transmission member, where the first spiral transmission member is in threaded connection to the first thread, the second spiral transmission member is in threaded connection to the second thread, the first spiral transmission member is connected to the first locking assembly, the second spiral transmission member is connected to the second locking assembly, and when the first lead screw rotates, the first spiral transmission member and the second spiral transmission member are adapted to move toward or away from each other along the first lead screw. The first locking assembly includes: a first slide rail and a second slide rail, which are arranged on two sides of the first lead screw and extend in the first direction; a first slide block and a second slide block, which are in sliding connection to the first slide rail and the second slide rail, respectively; a first connecting plate, which is connected to the first slide block, the second slide block and the first spiral transmission member; and at least one first positioning block, which is arranged on the first connecting plate, where a top of the first positioning block is provided with a first supporting portion configured to clamp the piece-to-be-transferred. The second locking assembly includes: a third slide rail and a fourth slide rail, which are arranged on two sides of the first lead screw and extend in the first direction; a third slide block and a fourth slide block, which are in sliding connection to the third slide rail and the fourth slide rail, respectively; a second connecting plate, which is connected to the third slide block, the fourth slide block and the second spiral transmission member; and at least one second positioning block, which is arranged on the second connecting plate, where a top of the second positioning block is provided with a second supporting portion, and the first supporting portion and the second supporting portion are configured to cooperate to fix the piece-to-be-transferred. Two ends of the first connecting plate and two ends of the second connecting plate are all provided with first casters and second casters, and the first casters and the second casters are in rolling connection to the positioning platform.

According to the transfer device provided in the present application, the automated guided vehicle may drive the positioning transmission mechanism to move along a preset route, and may carry the piece-to-be-transferred according to production and assembly procedures, which is conducive to reduction in labor cost, and improvement in assembly efficiency of a product. The first locking assembly and the second locking assembly may cooperate to fix the piece-to-be-transferred, and the first driving assembly drives the first locking assembly and the second locking assembly to move toward or away from each other, such that by adjusting a distance between the first locking assembly and the second locking assembly, space between the first locking assembly and the second locking assembly may be compatible with pieces-to-be-transferred having different specifications and sizes, and the transfer device is not required to be changed during changeover. Therefore, production efficiency during changeover is effectively improved, and the transfer device is conducive to reduction in labor costs and production costs.

In addition, the transfer device provided in the present application can further have additional technical features as follows:

In the implementation, the first driving assembly includes the first driving member, and the first transmission member, which is connected to the first driving member, and the first transmission member is connected to the first locking assembly and the second locking assembly. In this way, when the first driving member drives the first transmission member to execute an action, the first locking assembly and the second locking assembly may be driven to move toward or away from each other, so as to fix pieces-to-be-transferred having different specifications and sizes in a compatible manner.

In the implementation, the first spiral transmission member and the second spiral transmission member are in threaded connection to the first thread and the second thread, respectively, such that the first spiral transmission member, the second spiral transmission member and the first lead screw form the ball screw structure. Since the first thread and the second thread are arranged in opposite directions, when the first lead screw is driven by the first driving member to rotate, the first spiral transmission member and the second spiral transmission member may move toward or away from each other along the first lead screw, so as to drive the first locking assembly and the second locking assembly to move toward or away from each other. Therefore, the distance between the first locking assembly and the second locking assembly may be adjusted, so as to be compatible with pieces-to-be-transferred having different specifications and sizes.

In the implementation, the at least one first positioning block is arranged on the first connecting plate, the first connecting plate is connected to the first slide block and the second slide block, and may be driven by the first spiral transmission member to reciprocate in the first direction relative to the first slide rail and the second slide rail, so as to drive the at least one first positioning block to reciprocate in the first direction, and further to adjust the distance between the first positioning block and the second locking assembly. The structure and principle are relatively simple, and implementation is easy.

In the implementation, the at least one second positioning block is arranged on the second connecting plate, and the second connecting plate is connected to the third slide block and the fourth slide block, and may be driven by the second spiral transmission member to reciprocate in the first direction relative to the third slide rail and the fourth slide rail, so as to drive the at least one second positioning block to reciprocate in the first direction. Further, the second supporting portion on the second positioning block and the first supporting portion on the first positioning block may cooperate to fix the piece-to-be-transferred.

In some implementations of the present application, in a second direction perpendicular to the first direction in the horizontal plane, a plurality of first connecting portions are arranged on the first connecting plate and the second connecting plate at intervals, bottoms of the first positioning block and the second positioning block are provided with second connecting portions, and the first connecting portions are in detachable connection to the second connecting portions.

In the implementation, the plurality of first connecting portions are arranged on the first connecting plate and the second connecting plate, the plurality of first connecting portions are arranged at intervals in the second direction perpendicular to the first direction, and the first positioning block and the second positioning block are in detachable connection to the first connecting portions by means of the second connecting portions, such that in the case of a plurality of first positioning blocks and second positioning blocks, each first positioning block or second positioning block may be selectively connected to one of the plurality of first connecting portions by means of the second connecting portion. Further, distances between the plurality of first positioning blocks or the plurality of second positioning blocks may be adjusted, so as to fix pieces-to-be-transferred having different specifications and sizes in a compatible manner.

In some implementations of the present application, one of the first connecting portion and the second connecting portion is a positioning recess, the other one is a positioning column, and the positioning column is inserted into the positioning recess.

In the implementation, one of the first connecting portion and the second connecting portion is a positioning recess, and the other one is a positioning column. That is, the first connecting portion is a positioning recess, and the second connecting portion is a positioning column; or the first connecting portion is a positioning column, and the second connecting portion is a positioning recess. The positioning column is inserted into the positioning recess, such that the first positioning block is connected to the first connecting plate, and the second positioning block is connected to the second connecting plate.

In some implementations of the present application, an outer surface of the positioning column is provided with a snap-fit protrusion, an inner circumferential surface of the positioning recess is provided with a snap-fit groove, and when the positioning column is inserted into the positioning recess, the snap-fit protrusion is in snap-fit with the snap-fit groove.

In the implementation, the outer surface of the positioning column is provided with the snap-fit protrusion, and the inner circumferential surface of the positioning recess is provided with the snap-fit recess. In this way, when the positioning column is inserted into the positioning recess, the snap-fit protrusion may be in snap-fit with the snap-fit groove, which is conducive to further improvement in connection reliability between the first positioning block and the first connecting plate, and between the second positioning block and the second connecting plate, and facilitates separation of the first positioning block from the first connecting plate, and separation of the second positioning block from the second connecting plate under the action of an external force, thereby improving assembly and disassembly efficiency of a product.

In some implementations of the present application, the first supporting portion includes a first step structure, and the first step structure faces the second positioning block and is provided with a first step surface configured to support the piece-to-be-transferred; and the second supporting portion includes a second step structure, and the second step structure faces the first positioning block and is provided with a second step surface configured to support the piece-to-be-transferred.

In the implementation, the first step surface and the second step surface are configured to support the piece-to-be-transferred at the same time, and the first step structure and the second step structure may clamp the piece-to-be-transferred when moving toward each other, so as to play a limiting role, thereby improving stability of the piece-to-be-transferred in a transfer process.

In the implementation, the two ends of the first connecting plate and the two ends of the second connecting plate are provided with the first casters and the second casters. In this way, when the first connecting plate is driven by the first spiral transmission member to reciprocate, the first casters and the second casters are in rolling connection to the positioning platform, so as to play a role in supporting the first connecting plate, and avoid the situation that the first connecting plate is inclined due to uneven stress, which is conducive to improvement in movement stability of the first connecting plate, and further conducive to improvement in stability of a piece-to-be-transferred in a transfer process.

In some implementations of the present application, the positioning transmission mechanism further includes: a first limiting assembly, a second limiting assembly, and a second driving assembly connected to the first limiting assembly, where the first limiting assembly and the second limiting assembly are arranged on two opposite sides of the positioning platform at an interval in the second direction in the horizontal plane, and the second driving assembly is configured to drive the first limiting assembly to move in a direction toward or away from the second limiting assembly, such that the first limiting assembly and the second limiting assembly cooperate to clamp the piece-to-be-transferred; and the second direction is perpendicular to the first direction.

\In the implementation, after the first locking assembly and the second locking assembly fix two ends of the piece-to-be-transferred in the first direction, the first limiting assembly and the second limiting assembly may be driven by the second driving assembly to clamp two ends of the piece-to-be-transferred in the second direction, so as to improve stability of the piece-to-be-transferred in a transfer process. In addition, the first limiting assembly and the second limiting assembly may be driven by the second driving assembly to move toward or away from each other, so as to adjust a distance between the first limiting assembly and the second limiting assembly in the second direction, such that the first locking assembly and the second locking assembly cooperate to fix and then transfer pieces-to-be-transferred having different specifications and sizes.

In some implementations of the present application, the second driving assembly includes: a second driving member; and a second transmission assembly, which is connected to the second driving member and the first limiting assembly, where the second driving member is configured to drive the second transmission assembly to move, so as to drive the first limiting assembly to move in the direction toward or away from the second limiting assembly.

In the implementation, the first limiting assembly is a movable assembly, and the second limiting assembly is a fixed assembly. When the second driving member drives the second transmission assembly to move, the first transmission assembly may drive the first limiting assembly to move in the direction toward or away from the second limiting assembly, such that the first limiting assembly and the second limiting assembly cooperate to clamp two ends of the piece-to-be-transferred in the second direction.

In some implementations of the present application, the second transmission assembly includes: a second lead screw, which extends in the second direction; and a third spiral transmission member, which is in threaded connection to the second lead screw, and is connected to the first limiting assembly, where when the second driving member drives the second lead screw to rotate, the third spiral transmission member is adapted to reciprocate along the second lead screw, so as to drive the first limiting assembly to move in the direction toward or away from the second limiting assembly.

In the implementation, the second transmission assembly includes the second lead screw and the third spiral transmission member, the third spiral transmission member is in threaded connection to the second lead screw, and the third spiral transmission member and the second lead screw form a ball screw structure. In this way, since the third spiral transmission member is connected to the first limiting assembly, when the second driving member drives the second lead screw to rotate, the third spiral transmission member may drive the first limiting assembly to reciprocate in the second direction. Therefore, the distance between the first limiting assembly and the second limiting assembly may be adjusted, so as to match pieces-to-be-transferred having different lengths in the second direction.

In some implementations of the present application, the first limiting assembly includes: a fifth slide rail and a sixth slide rail, which are arranged on two sides of the second lead screw and extend in the second direction; a fifth slide block and a sixth slide block, which are in sliding connection to the fifth slide rail and the sixth slide rail, respectively; a third connecting plate, which is connected to the fifth slide block, the sixth slide block and the third spiral transmission member; and at least one first limiting block, which is arranged on the third connecting plate, and is configured to abut against the piece-to-be-transferred.

In the implementation, the third connecting plate is connected to the third spiral transmission member, the fifth slide block and the sixth slide block such that the third connecting plate may be driven by the third spiral transmission member to reciprocate in the second direction relative to the fifth slide rail and the sixth slide rail. The at least one first limiting block is arranged on the third connecting plate, such that when the third connecting plate moves in the second direction, the at least one first limiting block abuts against one end of the to-be-transported member in the second direction, and the at least one first limiting block and the second limiting assembly clamp the piece-to-be-transferred in a matching manner.

In some implementations of the present application, the second limiting assembly includes: a fourth connecting plate, which is parallel to the third connecting plate, where the fourth connecting plate and the third connecting plate are arranged on the positioning platform at an interval; and at least one second limiting block, which is arranged on the fourth connecting plate, and is configured to abut against the piece-to-be-transferred.

In the implementation, the second limiting assembly includes the fourth connecting plate and the at least one second limiting block, the fourth connecting plate is parallel to the third connecting plate, and the fourth connecting plate and the third connecting plate are arranged at an interval. In this way, when the third spiral transmission member drives the first limiting block on the third connecting plate to move, the first limiting block and the second limiting block may cooperate to abut against two ends of the piece-to-be-transferred in the second direction, so as to clamp the two ends of the piece-to-be-transferred in the second direction.

In some implementations of the present application, the supporting frame is provided with a positioning pin, the positioning platform is provided with a bearing guide sleeve matching the positioning pin, and the positioning pin is inserted into the bearing guide sleeve.

In the implementation, when the positioning platform is arranged on the supporting frame, the positioning pin is inserted into the bearing guide sleeve such that connection reliability between the positioning platform and the supporting frame can be improved, the situation that the positioning platform moves relative to the supporting frame is improved, which is conducive to improvement in stability of the piece-to-be-transferred in a transfer process.

In some implementations of the present application, the transfer device further includes: a handlebar, which is arranged at one end of the positioning platform.

In the implementation, the handlebar is configured to be held by an operator such that the operator can conveniently push the transfer device to move as required.

### Brief Description of Accompanying Drawings

Various other advantages and benefits will become apparent to those of ordinary skill in the art upon reading the following detailed description of preferred implementations. Accompanying drawings are merely for the purpose of illustrating preferred implementations, and are not to be construed as limiting the present application. Moreover, the same reference numerals represent the same components throughout the accompanying drawings. In the accompanying drawings:
FIG. 1 is an assembled schematic diagram of a transfer device according to some embodiments of the present application;
FIG. 2 is an exploded schematic diagram of a transfer device according to some embodiments of the present application; and
FIG. 3 is a perspective schematic diagram of a first positioning column from an angle of view according to some embodiments of the present application.

List of reference numerals:
transfer device 100;
automated guided vehicle 10, positioning platform 20, first locking assembly 30, second locking assembly 40, first driving assembly 50, first limiting assembly 60, second limiting assembly 70, and second driving assembly 80;
supporting frame 11, bearing guide sleeve 21, handlebar 22, first slide rail 31, second slide rail 32, first slide block 33, second slide block 34, first connecting plate 35, first positioning block 36, third slide rail 41, fourth slide rail 42, second connecting plate 43, second positioning block 44, first lead screw 51, first spiral transmission member 52, coupler 53, fifth slide rail 61, sixth slide rail 62, fifth slide block 63, sixth slide block 64, third connecting plate 65, first limiting block 66, fourth connecting plate 71, second limiting block 72, reference plate 73, second lead screw 81, and third spiral transmission member 82;
positioning pin 111, positioning recess 351, first caster 352, second caster 353, positioning column 361, first step structure 362, and first step surface 363; and
snap-fit protrusion 3611.

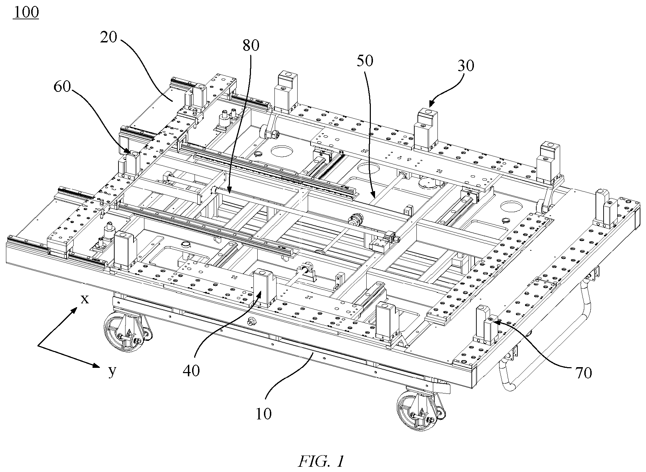

A direction of an x-axis of a coordinate system in FIG. 1 is a first direction, and a direction of a y-axis is a second direction.

### Detailed Description of Embodiments

Implementations of technical solutions of the present application will be described in detail in combination with accompanying drawings. The following implementations are merely used for illustrating technical solutions of the present application more clearly, and therefore merely serve as examples rather than limiting the scope of protection of the present application.

Unless otherwise defined, all technical and scientific terms used herein have the same meanings as those commonly understood by those skilled in the art to which the present application belongs. Terms used herein are merely for the purpose of describing particular implementations, but are not intended to limit the present application. Terms "include", "comprise", "have" and their any variations in the description and claims of the present application as well as the above brief description of accompanying drawings are intended to cover non-exclusive inclusions.

In the description of implementations of the present application, terms "first" and "second" are merely used for distinguishing different objectives, and cannot be construed as indicating or implying relative importance or implicitly indicating the quantity, specific sequence or primary and secondary relations of technical features indicated. In the description of implementations of the present application, "a plurality of" means two or more, unless expressly specified otherwise.

Reference to an "implementation" herein means that a specific feature, structure or characteristic described in combination with an implementation can be included in at least one implementation of the present application. Appearance of this phrase in all positions in the description does not necessarily mean the same implementation, nor is an independent or alternative implementation mutually exclusive with other implementations. Those skilled in the art explicitly and implicitly understand that implementations described herein can be combined with other implementations.

In the description of implementations of the present application, term "and/or" is merely an association relation describing an associated object, and means that there can be three relations. For example, A and/or B can represent: only A exists, both A and B exist, or only B exists. In addition, the character "/" herein generally indicates an "or" relation between associated objects.

In the description of implementations of the present application, term "a plurality of" refers to two or more (including two). Similarly, "a plurality of groups" refers to two or more groups (including two groups), and "a plurality of pieces" refers to two or more pieces (including two pieces).

In the description of implementations of the present application, orientation or position relations indicated by terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on orientation or position relations shown in accompanying drawings, and are merely for convenience of description of implementations of the present application and simplification of the description, rather than indicating or implying that a device or element referred to must have a specific orientation or be constructed and operated in a described orientation, and therefore cannot be construed as limiting the present application.

In the description of implementations of the present application, unless otherwise explicitly specified and defined, terms "mount", "connected", "connect", "fix", etc. should be interpreted in the broad sense. For example, a connection may be a fixed connection, a detachable connection, or an integral connection; may be a mechanical connection or an electric connection; and may be a direct connection or an indirect connection by means of an intermediate medium, or may be communication between interiors of two elements or interaction between the two elements. Those of ordinary skills in the art can understand specific meanings of the above terms in implementations of the present application according to specific circumstances.

At present, from the perspective of the development of the market situation, traction batteries are used more and more widely. The traction batteries are not only used in energy storage power systems such as hydraulic power, thermal power, wind power and solar power stations, but also widely used in electric vehicles such as electric bicycles, electric motorcycles, electric vehicles, aerospace and other fields. With the continuous expansion of the application field of traction batteries, market demand for the traction batteries is also expanding.

In the related art, a semi-automatic apparatus is mainly used on a battery production line to process, assemble, transmit and detect batteries. On the battery production line, battery components in a previous procedure are generally transferred to a next procedure by a transfer device and then are assembled.

Inventors of the present application note that since each transfer device in a battery production line is only suitable for battery components with the same specification and dimension, and cannot automatically adapt to products with different sizes, during changeover, it is required to manually change the transfer device, resulting in relatively low production efficiency, and relatively high cost.

In order to solve the problems that during changeover, the transfer device is required to be manually changed, resulting in relatively low production efficiency, and relatively high costs, inventors of the present application designs a transfer device after in-depth research. A first driving assembly of a positioning transmission mechanism is configured to drive a first locking assembly and a second locking assembly to move toward or away from each other in a first direction of a positioning platform, such that the first locking assembly and the second locking assembly cooperate to support and fix two ends of a piece-to-be-transferred in the first direction, so as to be compatible with pieces-to-be-transferred having different specifications and sizes. Therefore, during changeover, the transfer device is not required to be changed, as long as a distance between the first locking assembly and the second locking assembly is adjusted, such that production efficiency during changeover is effectively improved, and production costs are reduced.

The transfer device 100 disclosed in an embodiment of the present application is not only suitable for transferring battery components in a battery production line, but also suitable for transferring parts in an automobile production line, a ship production line, etc.

In the following embodiments, for convenience of description, a transfer device for a battery production line in an embodiment of the present application is described.

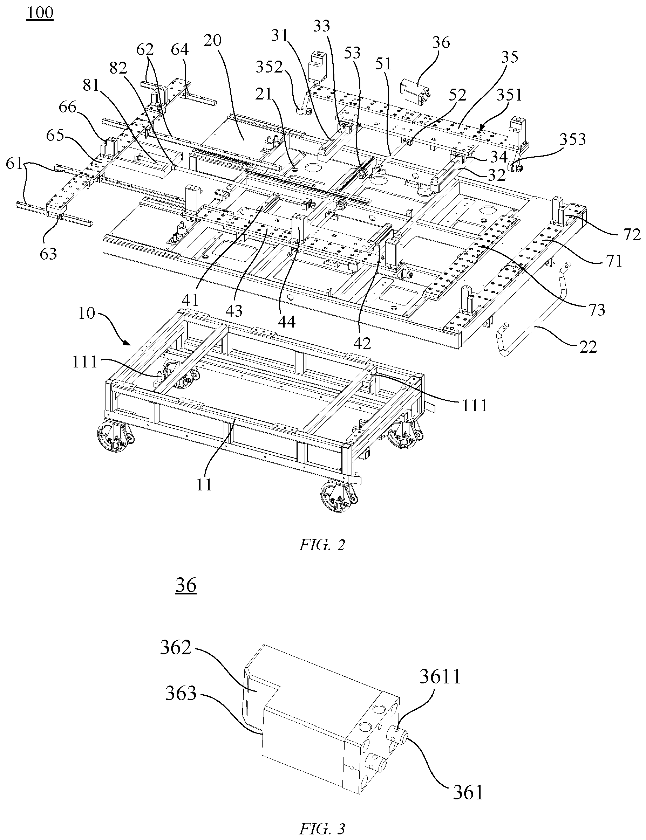

With reference to FIGs. 1 and 2, an assembled schematic diagram of a transfer device according to some embodiments of the present application is shown in FIG. 1; and an exploded schematic diagram of a transfer device according to some embodiments of the present application is shown in FIG. 2. According to some embodiments of the present application, the present application provides a transfer device 100. The transfer device includes: an automated guided vehicle 10, a positioning platform 20 and a positioning transmission mechanism. The automated guided vehicle 10 is provided with a supporting frame 11; the positioning platform 20 is arranged on the supporting frame 11; and the positioning transmission mechanism includes a first locking assembly 30, a second locking assembly 40, and a first driving assembly 50 connected to the first locking assembly 30 and the second locking assembly 40, where the first locking assembly 30 and the second locking assembly 40 are arranged on two opposite sides of the positioning platform 20 at an interval in a first direction in a horizontal plane, and the first driving assembly 50 is configured to drive the first locking assembly and the second locking assembly to move toward or away from each other, such that the first locking assembly 30 and the second locking assembly 40 cooperate to fix a piece-to-be-transferred.

The automated guided vehicle 10 is a transport vehicle equipped with an electromagnetic automated guided device, an optical automated guided device, etc., may travel along a specified guidance path, and has safety protection and various transfer functions. The first locking assembly and the second locking assembly are configured to cooperate to support and fix the piece-to-be-transferred. The first driving assembly 50 is configured to provide power when the first locking assembly and the second locking assembly move toward or away from each other.

The first driving assembly 50 drives the first locking assembly 30 and the second locking assembly 40 to move toward or away from each other, such that by adjusting a distance between the first locking assembly 30 and the second locking assembly, the first locking assembly 30 and the second locking assembly cooperate to fix two ends of the piece-to-be-transferred in the first direction. Further, space between the first locking assembly 30 and the second locking assembly 40 may be compatible with pieces-to-be-transferred having different specifications and sizes, and the transfer device 100 is not required to be changed during changeover. Therefore, production efficiency during changeover is effectively improved, and the transfer device is conducive to reduction in labor costs and production costs.

According to some embodiments of the present application, the first driving assembly 50 includes a first driving member (not shown in figures) and a first transmission assembly connected to the first driving member, the first transmission assembly is connected to the first locking assembly 30 and the second locking assembly 40, and the first driving member is configured to drive the first transmission assembly to move, so as to drive the first locking assembly 30 and the second locking assembly 40 to move toward or away from each other.

As an example, the first driving member is an electric motor, and the first transmission assembly is a ball screw structure.

Specifically, the first transmission assembly includes a first lead screw 51, a first spiral transmission member 52 and a second spiral transmission member. The first lead screw 51 extends in the first direction and is connected to the first driving member, two ends of the first lead screw 51 are provided with a first thread and a second thread, respectively, and the first thread and the second thread are arranged in opposite directions. The first spiral transmission member 52 is in threaded connection to the first thread, the second spiral transmission member is in threaded connection to the second thread, the first spiral transmission member is connected to the first locking assembly 30, the second spiral transmission member is connected to the second locking assembly 40, and when the first lead screw 51 rotates, the first spiral transmission member 52 and the second spiral transmission member are adapted to move toward or away from each other along the first lead screw 51.

Two ends of the first thread 51 are in rotating connection to the positioning platform 20, and the first spiral transmission member 52 and the second spiral transmission member are in threaded connection to the first thread and the second thread, respectively, such that the first spiral transmission member 52, the second spiral transmission member and the first lead screw 51 form a ball screw structure. Since the first thread and the second thread are arranged in opposite directions, when the first lead screw 51 is driven by the first driving member to rotate, the first spiral transmission member 52 and the second spiral transmission member may move toward or away from each other along the first lead screw 51, so as to drive the first locking assembly 30 and the second locking assembly 40 to move toward or away from each other. Therefore, the distance between the first locking assembly 30 and the second locking assembly 40 may be adjusted, so as to be compatible with pieces-to-be-transferred having different specifications and sizes.

With reference to FIGs. 1 and 2, according to an embodiment of the present application, the first transmission assembly includes a plurality of first lead screws 51, a first spiral transmission member 52 and a second spiral transmission member. The plurality of first lead screws 51 are connected to each other by means of a coupler 53, the two first lead screws 51 located on two ends of the positioning platform 20 in the first direction are provided with a first thread and a second thread, respectively, the first thread and the second thread are arranged in opposite directions, the first spiral transmission member 52 and the second spiral transmission member are in threaded connection to the first thread and the second thread, respectively, the first spiral transmission member 52 is connected to the first locking assembly 30, and the second spiral transmission member is connected to the second locking assembly 40. When the first driving member drives one of the first lead screws 51 to rotate, the first spiral transmission member 52 and the second spiral transmission member may drive the first locking assembly 30 and the second locking assembly 40 to move toward or away from each other.

With reference to FIGs. 1 and 2, according to some embodiments of the present application, the first locking assembly 30 includes a first slide rail 31, a second slide rail 32, a first slide block 33, a second slide block 34, a first connecting plate 35 and at least one first positioning block 36. The first slide rail 31 and the second slide rail 32 are arranged on two sides of the first lead screw 51 and extend in the first direction. The first slide block 33 and the second slide block 34 are in sliding connection to the first slide rail 31 and the second slide rail 32, respectively. The first connecting plate 35 is connected to the first slide block 33, the second slide block 34 and the first spiral transmission member 52. The at least one first positioning block 36 is arranged on the first connecting plate 35, and a top of the first positioning block 36 is provided with a first supporting portion configured to clamp the piece-to-be-transferred.

With reference to FIGs. 1 and 2, according to some embodiments of the present application, the second locking assembly 40 includes: a third slide rail 41 and a fourth slide rail 42, which are arranged on two sides of the first lead screw 51 and extend in the first direction; a third slide block and a fourth slide block, which are in sliding connection to the third slide rail 41 and the fourth slide rail 42, respectively; a second connecting plate 43, which is connected to the third slide block, the fourth slide block and the second spiral transmission member; and at least one second positioning block 44, which is arranged on the second connecting plate 43, where a top of the second positioning block 44 is provided with a second supporting portion, and the first supporting portion and the second supporting portion are configured to cooperate to fix the piece-to-be-transferred.

One or more first positioning blocks 36 may be arranged. In the case of a plurality of first positioning blocks 36, the plurality of first positioning blocks 36 are arranged on the first connecting plate 35 at intervals.

One or more second positioning blocks 44 may be arranged. In the case of a plurality of the second positioning blocks 44, the plurality of second positioning blocks 44 are arranged on the second connecting plate 43 at intervals.

The first supporting portion and the second supporting portion are configured to support one end of the piece-to-be-transferred in the first direction, and are configured to clamp the piece-to-be-transferred when the first positioning block 36 and the second positioning block 44 move toward each other, so as to ensure stability during transfer.

The at least one first positioning block 36 is arranged on the first connecting plate 35, and the first connecting plate 35 is connected to the first spiral transmission member 52, a first slide block 33 and a second slide block 34 such that the first connecting plate 35 may be driven by the first spiral transmission member 52 to reciprocate in the first direction relative to the first slide rail 31 and the second slide rail 32, so as to drive the at least one first positioning block 36 to reciprocate in the first direction.

Similarly, the at least one second positioning block 44 is arranged on the second connecting plate 43, and the second connecting plate 43 is connected to the second spiral transmission member, a third slide block and a fourth slide block, such that the second connecting plate 43 may be driven by the second spiral transmission member to reciprocate in the first direction relative to the third slide rail 41 and the fourth slide rail 42, so as to drive the at least one first positioning block 36 to reciprocate in the first direction. Therefore, the distance between the first positioning block 36 and the second positioning assembly 44 is adjusted, so as to adapt to pieces-to-be-transferred of different specifications and sizes. Then, the first supporting portion and the second supporting portion on the first positioning block 36 and the second positioning block 44 support and fix the two ends of the piece-to-be-transferred in the first direction. The structure and principle are relatively simple, and implementation is easy.

With reference to FIGs. 1 and 2, according to some embodiments of the present application, in a second direction perpendicular to the first direction in the horizontal plane, a plurality of first connecting portions are arranged on the first connecting plate 35 and the second connecting plate 43 at intervals, bottoms of the first positioning block 36 and the second positioning block 44 are provided with second connecting portions, and the first connecting portions are in detachable connection to the second connecting portions.

The first connecting portions are in detachable connection to the second connecting portions, and a plurality of first connecting portions are arranged. In the case of a plurality of first positioning blocks 36 and second positioning blocks 44, each first positioning block 36 or second positioning block 44 may be selectively connected to one of the plurality of first connecting portions by means of the second connecting portion. Further, distances between the plurality of first positioning blocks 36 or the plurality of second positioning blocks 44 are adjusted, such that the first positioning blocks 36 and the second positioning block 44 may effectively support and fix pieces-to-be-transferred having different specifications and sizes, so as to ensure support and fixation reliability of the piece-to-be-transferred.

With reference to FIGs. 1 and 2, according to some embodiments of the present application, one of the first connecting portion and the second connecting portion is a positioning recess 351, the other one is a positioning column 361, and the positioning column 361 is inserted into the positioning recess 351.

One of the first connecting portion and the second connecting portion is a positioning recess 351, and the other one is a positioning column 361. That is, the first connecting portion is a positioning recess 351, and the second connecting portion is a positioning column 361; or the first connecting portion is a positioning column 361, and the second connecting portion is a positioning recess 351.

When the first positioning block 36 is assembled with the first connecting plate 35, the positioning column 361 of the first positioning block 36 is inserted into the positioning recess 351 of the first connecting plate 35, such that the first positioning block 36 is connected to the first connecting plate 35. When the second positioning block 44 is assembled with the second connecting plate 43, the positioning column 361 of the second positioning block 44 is inserted into the positioning recess 351 of the second connecting plate 43, such that the second positioning block 44 is connected to the second connecting plate 43, and assembly efficiency of a product is improved.

With reference to FIG. 3, a schematic diagram of a positioning block according to some embodiments of the present application is shown in FIG. 3. According to some embodiments of the present application, an outer surface of the positioning column 361 is provided with a snap-fit protrusion 3611, an inner circumferential surface of the positioning recess 351 is provided with a snap-fit groove, and when the positioning column 361 is inserted into the positioning recess 351, the snap-fit protrusion 3611 is in snap-fit with the snap-fit groove.

As an example, a plurality of snap-fit protrusions 3611 are arranged, and the plurality of the snap-fit protrusions 3611 are arranged at intervals on an outer circumferential side of the positioning column 361. A plurality of snap-fit grooves are arranged, and the plurality of snap-fit grooves are provided at intervals along an inner circumferential surface of the positioning recess 351.

The outer surface of the positioning column 361 is provided with the snap-fit protrusion 3611, and the inner circumferential surface of the positioning recess 351 is provided with the snap-fit groove. In this way, when the positioning column 361 is inserted into the positioning recess 351, the snap-fit protrusion 3611 may be in snap-fit with the snap-fit groove, which is conducive to further improvement in connection reliability between the first positioning block 36 and the first connecting plate 35, and between the second positioning block 44 and the second connecting plate 43, and facilitates separation of the first positioning block 36 from the first connecting plate 35, and separation of the second positioning block 44 from the second connecting plate 43 under the action of an external force, thereby improving assembly and disassembly efficiency of a product.

With reference to FIGs. 1-3, according to some embodiments of the present application, the first supporting portion includes a first step structure 362, and the first step structure 362 faces the second positioning block 44 and is provided with a first step surface 363 configured to support the piece-to-be-transferred. The second supporting portion includes a second step structure, and the second step structure faces the first positioning block 36 and is provided with a second step surface configured to support the piece-to-be-transferred.

A top of the first positioning block 36 is partially recessed towards a side of the second positioning block 44 to form the first step structure 362, and a top of the second positioning block 44 is partially recessed towards a side of the first positioning block 36 to form the second step structure.

The first step surface 363 and the second step surface are configured to support the piece-to-be-transferred at the same time, and when the first positioning block 36 and the second positioning block 44 to move toward each other, the first step structure 362 and the second step structure may cooperate to clamp the piece-to-be-transferred, so as to play a limiting role, thereby improving stability of the piece-to-be-transferred in a transfer process.

With reference to FIGs. 1 and 2, according to some embodiments of the present application, two ends of the first connecting plate 35 and two ends of the second connecting plate 43 are all provided with first casters 352 and second casters 353, and the first casters 352 and the second casters 353 are in rolling connection to the positioning platform 20.

The two ends of the first connecting plate 35 and the two ends of the second connecting plate 43 in the second direction are all provided with the first casters 352 and the second casters 353. In this way, when the first connecting plate 35 is driven by the first spiral transmission member 52 to reciprocate, the first casters 352 and the second casters 353 on the first connecting plate 35 are in rolling connection to the positioning platform 20, so as to play a role in supporting the first connecting plate 35, and avoid the situation that the first connecting plate 35 is inclined due to uneven stress, which is conducive to improvement in movement stability of the first connecting plate 35. Similarly, when the second connecting plate 43 is driven by the second spiral transmission member to reciprocate, the first casters 352 and the second casters 353 on the second connecting 43 are in rolling connection to the positioning platform 20, so as to play a role in supporting the second connecting plate 43, and avoid the situation that the second connecting plate 43 is inclined due to uneven stress, which is conducive to improvement in movement stability of the second connecting plate 43, and further conducive to improvement in stability of a piece-to-be-transferred in a transfer process.

With reference to FIGs. 1 and 2, according to some embodiments of the present application, the positioning transmission mechanism further includes: a first limiting assembly 60, a second limiting assembly 70, and a second driving assembly 80 connected to the first limiting assembly 60. The first limiting assembly 60 and the second limiting assembly 70 are arranged on two opposite sides of the positioning platform 20 at an interval in the second direction in the horizontal plane, and the second driving assembly 80 is configured to drive the first limiting assembly 60 to move in a direction toward or away from the second limiting assembly 70, such that the first limiting assembly 60 and the second limiting assembly 70 cooperate to clamp the piece-to-be-transferred; and the second direction is perpendicular to the first direction.

The first limiting assembly 60 and the second limiting assembly 70 are configured to fix two ends of the piece-to-be-transferred in the second direction, such that the piece-to-be-transferred is relatively fixed relative to the positioning platform 20 in the second direction.

After the first locking assembly 30 and the second locking assembly 40 fix two ends of the piece-to-be-transferred in the first direction in the horizontal plane, the first limiting assembly 60 and the second limiting assembly 70 may be driven by the second driving assembly 80 to clamp two ends of the piece-to-be-transferred in the second direction, so as to improve stability of the piece-to-be-transferred in a transfer process. In addition, the first limiting assembly 60 and the second limiting assembly 70 may be driven by the second driving assembly 80 to move toward or away from each other, so as to adjust a distance between the first limiting assembly 60 and the second limiting assembly 70 in the second direction, such that the first locking assembly 30 and the second locking assembly 40 cooperate to fix pieces-to-be-transferred having different specifications and sizes.

According to some embodiments of the present application, the second driving assembly 80 includes a second driving member (not shown in figures) and a second transmission assembly connected to the second driving member, and the second transmission assembly is connected to the first limiting assembly 60. The second driving member is configured to drive the second transmission assembly to move, so as to drive the first limiting assembly 60 to move in the direction toward or away from the second limiting assembly 70.

As an example, the second driving member is an electric motor, and the second transmission assembly is a ball screw structure.

It can be understood that the first limiting assembly 60 is a movable assembly, and the second limiting assembly 70 is a fixed assembly. Certainly, the second transmission assembly may be connected to the first limiting assembly 60 and the second limiting assembly 70, so as to drive the first limiting assembly 60 and the second limiting assembly 70 to move at the same time.

When the second driving member drives the second transmission assembly to move, the first transmission assembly may drive the first limiting assembly 60 to move in the direction toward or away from the second limiting assembly 70, such that the first limiting assembly and the second limiting assembly 70 cooperate to clamp two ends of the piece-to-be-transferred in the second direction.

With reference to FIGs. 1 and 2, according to some embodiments of the present application, the second transmission assembly includes a second lead screw 81 and a third spiral transmission member 82 in threaded connection to the second lead screw 81. The second lead screw 81 extends in the second direction, the third spiral transmission member 82 is connected to the first limiting assembly 60, and when the second driving member drives the second lead screw 81 to rotate, the third spiral transmission member 82 is adapted to reciprocate along the second lead screw 81, so as to drive the first limiting assembly 60 to move in the direction toward or away from the second limiting assembly 70.

Two ends of the second lead screw 81 are in rotating connection to the positioning platform 20, the second lead screw 81 is perpendicular to the first lead screw 51, and the second lead screw 81 is arranged at a different height from the first lead screw 51.

Since the third spiral transmission member 82 is connected to the first limiting assembly 60, when the second driving member drives the second lead screw 81 to rotate, the third spiral transmission member 82 may drive the first limiting assembly 60 to reciprocate in the second direction. Therefore, the distance between the first limiting assembly 60 and the second limiting assembly 70 may be adjusted, so as to fix pieces-to-be-transferred having different lengths in the second direction in an adjustable manner.

With reference to FIGs. 1 and 2, according to some embodiments of the present application, the first limiting assembly 60 includes a fifth slide rail 61, a sixth slide rail 62, a fifth slide block 63, a sixth slide block 64, a third connecting plate 65 and at least one first limiting block 66. The fifth slide rail 61 and the sixth slide rail 62 are arranged on two sides of the second lead screw 81 and extend in the second direction. The fifth slide block 63 and the sixth slide block 64 are in sliding connection to the fifth slide rail 61 and the sixth slide rail 62, respectively. The third connecting plate 65 is connected to the fifth slide block 63, the sixth slide block 64 and the third spiral transmission member 82. The at least one first limiting block 66 is arranged on the third connecting plate 65, and is configured to abut against one end of the piece-to-be-transferred in the second direction.

With reference to FIGs. 1 and 2, according to some embodiments of the present application, the second limiting assembly 70 includes a fourth connecting plate 71 and at least one second limiting block 72 arranged on the fourth connecting plate 71. The fourth connecting plate 71 is parallel to the third connecting plate 65, and the fourth connecting plate and the third connecting plate 65 are arranged on two ends of the positioning platform 20 at an interval. The at least one second limiting block 72 is configured to abut against the piece-to-be-transferred.

The third connecting plate 65 is connected to the third spiral transmission member 82, the fifth slide block 63 and the sixth slide block 64 such that the third connecting plate may be driven by the third spiral transmission member 82 to reciprocate in the second direction relative to the fifth slide rail 61 and the sixth slide rail 62. The at least one first limiting block 66 is arranged on the third connecting plate 65, such that when the third connecting plate 65 moves in the second direction, the at least one first limiting block 66 may abut against one end of the piece-to-be-transferred in the second direction.

The fourth connecting plate 71 and the third connecting plate 65 are arranged in parallel to each other at an interval, such that when the third spiral transmission member 82 drives the first limiting block 66 on the third connecting plate 65 to move, the first limiting block 66 and the second limiting block 72 may cooperate to abut against two ends of the piece-to-be-transferred in the second direction, so as to clamp the two ends of the piece-to-be-transferred in the second direction.

It can be understood that a height of the first limiting block 66 and a height of the second limiting block 72 are greater than a height of the first step surface 363 and a height of the second step surface.

Specifically, the third connecting plate 65 and the fourth connecting plate 71 are further provided with a plurality of positioning recesses 351, the plurality of positioning recesses 351 on the third connecting plate 65 and the fourth connecting plate 71 are provided at intervals in the first direction, bottoms of the first limiting block 66 and the second limiting block 72 are provided with positioning columns 361, and the positioning columns 361 are inserted into the positioning recesses 351.

With reference to FIGs. 1 and 2, according to some embodiments of the present application, the supporting frame 11 is provided with a positioning pin 111, the positioning platform 20 is provided with a bearing guide sleeve 21 matching the positioning pin 111, and the positioning pin 111 is inserted into the bearing guide sleeve 21.

When the positioning platform 20 is arranged on the supporting frame 11, the positioning pin 111 is inserted into the bearing guide sleeve 21 such that connection reliability between the positioning platform 20 and the supporting frame 11 can be improved. Moreover, a position of the positioning platform 20 relative to the supporting frame 11 is relatively fixed, which is conducive to improvement in stability of the piece-to-be-transferred in a transfer process.

With reference to FIGs. 1 and 2, according to some embodiments of the present application, the transfer device 100 further includes a handlebar 22, which is arranged at one end of the positioning platform 20.

The handlebar 22 is configured to be held by an operator such that the operator can conveniently push the transfer device 100 to move as required.

With reference to FIGs. 1 and 2, according to some embodiments of the present application, the positioning platform 20 is further provided with a reference plate 73. The reference plate 73, the third connecting plate 65 and the fourth connecting plate 71 are parallel to each other at intervals, and the reference plate is configured to provide a positioning reference when a piece-to-be-transferred is fixed.

According to some embodiments of the present application, the positioning platform 20 is provided with a first graduated scale and a second graduated scale. The first graduated scale extends from one end of the positioning platform 20 to the other end in the first direction, and is configured to measure a moving distance of the first locking assembly 30. The second graduated scale extends from one end of the positioning platform 20 to the other end in the second direction, and is configured to measure a moving distance of the first limiting assembly 60.

With reference to FIGs. 1 and 2, according to some embodiments of the present application, the present application provides a transfer device 100. The transfer device includes an automated guided vehicle 10, a positioning platform 20 and a positioning transmission mechanism. The automated guided vehicle 10 is provided with a supporting frame 11. The positioning platform 20 is arranged on the supporting frame 11. The positioning transmission mechanism includes a first locking assembly 30, a second locking assembly 40, a first limiting assembly 60, a second limiting assembly 70, a first driving assembly 50 connected to the first locking assembly 30 and the second locking assembly 40, and a second driving assembly 80 connected to the first limiting assembly 60. The first locking assembly 30 and the second locking assembly 40 are arranged on two opposite sides of the positioning platform 20 at an interval in a first direction in the horizontal plane, and the first limiting assembly 60 and the second limiting assembly 70 are arranged on two opposite sides of the positioning platform 20 at an interval in a second direction perpendicular to the first direction in the horizontal plane. The first driving assembly 50 is configured to drive the first locking assembly 30 and the second locking assembly 40 to move toward or away from each other, such that the first locking assembly 30 and the second locking assembly 40 cooperate to lock two ends of the piece-to-be-transferred in the first direction. The second driving assembly 80 is configured to drive the first limiting assembly 60 to move toward or away from the second limiting assembly 70, such that the first limiting assembly 60 and the second limiting assembly 70 cooperate to lock two ends of the second limiting assembly 70. The distance between the first locking assembly 30 and the second locking assembly 40, and the distance between the first limiting assembly 60 and the second limiting assembly 70 may be adjusted, so as to be compatible with pieces-to-be-transferred having different specifications and sizes. Therefore, the transfer device 100 is not required to be changed during changeover, so as to improve production efficiency during changeover.

## Claims

1. A transfer device (100), comprising:
an automated guided vehicle (10), which is provided with a supporting frame (11);
a positioning platform (20), which is arranged on the supporting frame (11); and
a positioning transmission mechanism, which comprises a first locking assembly (30), a second locking assembly (40), and a first driving assembly (50) connected to the first locking assembly (30) and the second locking assembly (40), wherein the first locking assembly (30) and the second locking assembly (40) are arranged on two opposite sides of the positioning platform (20) at an interval in a first direction in a horizontal plane, and the first driving assembly (50) is configured to drive the first locking assembly (30) and the second locking assembly (40) to move toward or away from each other, such that the first locking assembly (30) and the second locking assembly (40) cooperate to fix a piece-to-be-transferred;
wherein the first driving assembly (50) comprises:
a first driving member; and
a first transmission assembly, which is connected to the first driving member and is connected to the first locking assembly (30) and the second locking assembly (40), respectively, wherein the first driving member is configured to drive the first transmission assembly to move, so as to drive the first locking assembly (30) and the second locking assembly (40) to move toward or away from each other;
wherein the first transmission assembly comprises:
a first lead screw (51), which is connected to the first driving member, wherein the first lead screw (51) extends in the first direction, two ends of the first lead screw (51) are provided with a first thread and a second thread, respectively, and the first thread and the second thread are arranged in opposite directions; and
a first spiral transmission member (52) and a second spiral transmission member, wherein the first spiral transmission member (52) is in threaded connection to the first thread, the second spiral transmission member is in threaded connection to the second thread, the first spiral transmission member (52) is connected to the first locking assembly (30), the second spiral transmission member is connected to the second locking assembly (40), and when the first lead screw (51) rotates, the first spiral transmission member (52) and the second spiral transmission member are adapted to move toward or away from each other along the first lead screw (51);
**characterized in that** the first locking assembly (30) comprises:
a first slide rail (31) and a second slide rail (32), which are arranged on two sides of the first lead screw (51) and extend in the first direction;
a first slide block (33) and a second slide block (34), which are in sliding connection to the first slide rail (31) and the second slide rail (32), respectively;
a first connecting plate (35), which is connected to the first slide block (33), the second slide block (34) and the first spiral transmission member (52); and
at least one first positioning block (36), which is arranged on the first connecting plate (35), wherein a top of the first positioning block (36) is provided with a first supporting portion configured to clamp the piece-to-be-transferred;
wherein the second locking assembly (40) comprises:
a third slide rail (41) and a fourth slide rail (42), which are arranged on two sides of the first lead screw (51) and extend in the first direction;
a third slide block and a fourth slide block, which are in sliding connection to the third slide rail (41) and the fourth slide rail (42), respectively;
a second connecting plate (43), which is connected to the third slide block, the fourth slide block and the second spiral transmission member; and
at least one second positioning block (44), which is arranged on the second connecting plate (43), wherein a top of the second positioning block (44) is provided with a second supporting portion, and the first supporting portion and the second supporting portion are configured to cooperate to fix the piece-to-be-transferred; and
wherein two ends of the first connecting plate (35) and two ends of the second connecting plate (43) are all provided with first casters (352) and second casters (353), and the first casters (352) and the second casters (353) are in rolling connection to the positioning platform (20).

2. The transfer device (100) according to claim 1, wherein in a second direction perpendicular to the first direction in the horizontal plane, a plurality of first connecting portions are arranged on the first connecting plate (35) and the second connecting plate (43) at intervals, bottoms of the first positioning block (36) and the second positioning block (44) are provided with second connecting portions, and the first connecting portions are in detachable connection to the second connecting portions.

3. The transfer device (100) according to claim 2, wherein one of the first connecting portion and the second connecting portion is a positioning recess (351), the other one is a positioning column (361), and the positioning column (361) is inserted into the positioning recess (351).

4. The transfer device (100) according to claim 3, wherein an outer surface of the positioning column (361) is provided with a snap-fit protrusion (3611), an inner circumferential surface of the positioning recess (351) is provided with a snap-fit groove, and when the positioning column (361) is inserted into the positioning recess (351), the snap-fit protrusion (3611) is in snap-fit with the snap-fit groove.

5. The transfer device (100) according to any one of claims 1-4, wherein the first supporting portion comprises a first step structure (362), and the first step structure (362) faces the second positioning block (44) and is provided with a first step surface (363) configured to support the piece-to-be-transferred; and
the second supporting portion comprises a second step structure, and the second step structure faces the first positioning block (36) and is provided with a second step surface configured to support the piece-to-be-transferred.

6. The transfer device (100) according to any one of claims 1-5, wherein the positioning transmission mechanism further comprises: a first limiting assembly (60), a second limiting assembly (70), and a second driving assembly (80) connected to the first limiting assembly (60), wherein the first limiting assembly (60) and the second limiting assembly (70) are arranged on two opposite sides of the positioning platform (20) at an interval in a second direction in the horizontal plane, and the second driving assembly (80) is configured to drive the first limiting assembly (60) to move in a direction toward or away from the second limiting assembly (70), such that the first limiting assembly (60) and the second limiting assembly (70) cooperate to clamp the piece-to-be-transferred; and
the second direction is perpendicular to the first direction.

7. The transfer device (100) according to claim 6, wherein the second driving assembly (80) comprises:
a second driving member; and
a second transmission assembly, which is connected to the second driving member and the first limiting assembly (60), wherein the second driving member is configured to drive the second transmission assembly to move, so as to drive the first limiting assembly (60) to move in the direction toward or away from the second limiting assembly (70).

8. The transfer device (100) according to claim 7, wherein the second transmission assembly comprises:
a second lead screw (81), which extends in the second direction; and
a third spiral transmission member (82), which is in threaded connection to the second lead screw (81), and is connected to the first limiting assembly (60), wherein when the second driving member drives the second lead screw (81) to rotate, the third spiral transmission member (82) is adapted to reciprocate along the second lead screw (81), so as to drive the first limiting assembly (60) to move in the direction toward or away from the second limiting assembly (70).

9. The transfer device (100) according to claim 8, wherein the first limiting assembly (60) comprises:
a fifth slide rail (61) and a sixth slide rail (62), which are arranged on two sides of the second lead screw (81) and extend in the second direction;
a fifth slide block (63) and a sixth slide block (64), which are in sliding connection to the fifth slide rail (61) and the sixth slide rail (62), respectively;
a third connecting plate (65), which is connected to the fifth slide block (63), the sixth slide block (64) and the third spiral transmission member (82); and
at least one first limiting block (66), which is arranged on the third connecting plate (65), and is configured to abut against the piece-to-be-transferred.

10. The transfer device (100) according to claim 9, wherein the second limiting assembly (70) comprises:
a fourth connecting plate (71), which is parallel to the third connecting plate (65), wherein the fourth connecting plate (71) and the third connecting plate (65) are arranged on the positioning platform (20) at an interval; and
at least one second limiting block (72), which is arranged on the fourth connecting plate (71), and is configured to abut against the piece-to-be-transferred.

11. The transfer device (100) according to any one of claims 1-10, wherein the supporting frame (11) is provided with a positioning pin (111), the positioning platform (20) is provided with a bearing guide sleeve (21) matching the positioning pin (111), and the positioning pin (111) is inserted into the bearing guide sleeve (21);
and/or
further comprising: a handlebar (22), which is arranged at one end of the positioning platform (20).

## Patentansprüche

1. Transfervorrichtung (100), umfassend:
ein automatisch geführtes Fahrzeug (10), das mit einem Tragrahmen (11) versehen ist;
eine Positionierplattform (20), die auf dem Tragrahmen (11) angeordnet ist; und
einen Positioniergetriebemechanismus, der eine erste Verriegelungsanordnung (30), eine zweite Verriegelungsanordnung (40) und eine erste Antriebsanordnung (50) umfasst, die mit der ersten Verriegelungsanordnung (30) und der zweiten Verriegelungsanordnung (40) verbunden ist, wobei die erste Verriegelungsanordnung (30) und die zweite Verriegelungsanordnung (40) auf zwei gegenüberliegenden Seiten der Positionierplattform (20) mit Abstand in einer ersten Richtung in einer Horizontalebene angeordnet sind und die erste Antriebsanordnung (50) dazu ausgelegt ist, die erste Verriegelungsanordnung (30) und die zweite Verriegelungsanordnung (40) aufeinander zu oder voneinander weg zu bewegen, sodass die erste Verriegelungsanordnung (30) und die zweite Verriegelungsanordnung (40) zusammenwirken, um ein zu übertragendes Teil zu fixieren; wobei die erste Antriebsanordnung (50) umfasst:
ein erstes Antriebselement; und
eine erste Getriebeanordnung, die mit dem ersten Antriebselement verbunden ist und jeweils mit der ersten Verriegelungsanordnung (30) und der zweiten Verriegelungsanordnung (40) verbunden ist, wobei das erste Antriebselement dazu ausgelegt ist, die erste Getriebeanordnung anzutreiben, um die erste Verriegelungsanordnung (30) und die zweite Verriegelungsanordnung (40) aufeinander zu oder voneinander weg zu bewegen;
wobei die erste Getriebeanordnung umfasst:
eine erste Gewindespindel (51), die mit dem ersten Antriebselement verbunden ist, wobei sich die erste Gewindespindel (51) in der ersten Richtung erstreckt, zwei Enden der ersten Gewindespindel (51) mit einem ersten Gewinde bzw. einem zweiten Gewinde versehen sind und das erste Gewinde und das zweite Gewinde in entgegengesetzten Richtungen angeordnet sind; und
ein erstes spiralförmiges Getriebeelement (52) und ein zweites spiralförmiges Getriebeelement, wobei das erste spiralförmige Getriebeelement (52) mit dem ersten Gewinde, das zweite spiralförmige Getriebeelement in Gewindeverbindung mit dem zweiten Gewinde steht, das erste spiralförmige Getriebeelement (52) mit der ersten Verriegelungsanordnung (30) verbunden ist, das zweite spiralförmige Getriebeelement mit der zweiten Verriegelungsanordnung (40) verbunden ist, und wenn sich die erste Gewindespindel (51) dreht, das erste spiralförmige Getriebeelement (52) und das zweite spiralförmige Getriebeelement dazu ausgelegt sind, sich entlang der ersten Gewindespindel (51) aufeinander zu oder voneinander weg zu bewegen;
**dadurch gekennzeichnet, dass** die erste Verriegelungsanordnung (30) umfasst:
eine erste Gleitschiene (31) und eine zweite Gleitschiene (32), die auf zwei Seiten der ersten Gewindespindel (51) angeordnet sind und sich in der ersten Richtung erstrecken;
einen ersten Gleitblock (33) und einen zweiten Gleitblock (34), die mit der ersten Gleitschiene (31) bzw. der zweiten Gleitschiene (32) in Gleitverbindung stehen;
eine erste Verbindungsplatte (35), die mit dem ersten Gleitblock (33), dem zweiten Gleitblock (34) und dem ersten spiralförmigen Getriebeelement (52) verbunden ist; und
mindestens einen ersten Positionierblock (36), der an der ersten Verbindungsplatte (35) angeordnet ist, wobei eine Oberseite des ersten Positionierblocks (36) mit einem ersten Stützabschnitt versehen ist, der dazu ausgelegt ist, das zu übertragende Teil zu klemmen;
wobei die zweite Verriegelungsanordnung (40) umfasst:
eine dritte Gleitschiene (41) und eine vierte Gleitschiene (42), die auf zwei Seiten der ersten Gewindespindel (51) angeordnet sind und sich in der ersten Richtung erstrecken;
einen dritten Gleitblock und einen vierten Gleitblock, die mit der dritten Gleitschiene (41) bzw. der vierten Gleitschiene (42) in Gleitverbindung stehen;
eine zweite Verbindungsplatte (43), die mit dem dritten Gleitblock, dem vierten Gleitblock und dem zweiten spiralförmigen Getriebeelement verbunden ist; und
mindestens einen zweiten Positionierblock (44), der an der zweiten Verbindungsplatte (43) angeordnet ist, wobei eine Oberseite des zweiten Positionierblocks (44) mit einem zweiten Stützabschnitt versehen ist und der erste Stützabschnitt und der zweite Stützabschnitt dazu ausgelegt sind, zusammenzuwirken, um das zu übertragende Teil zu fixieren; und
wobei zwei Enden der ersten Verbindungsplatte (35) und zwei Enden der zweiten Verbindungsplatte (43) alle mit ersten Laufrollen (352) und zweiten Laufrollen (353) versehen sind und die ersten Laufrollen (352) und die zweiten Laufrollen (353) in Rollverbindung mit der Positionierplattform (20) stehen.

2. Transfervorrichtung (100) nach Anspruch 1, wobei in einer zweiten Richtung senkrecht zur ersten Richtung in der Horizontalebene eine Vielzahl von ersten Verbindungsabschnitten auf der ersten Verbindungsplatte (35) und der zweiten Verbindungsplatte (43) in Abständen angeordnet sind, die Unterseiten des ersten Positionierblocks (36) und des zweiten Positionierblocks (44) mit zweiten Verbindungsabschnitten versehen sind und die ersten Verbindungsabschnitte in lösbarer Verbindung mit den zweiten Verbindungsabschnitten stehen.

3. Transfervorrichtung (100) nach Anspruch 2, wobei einer des ersten Verbindungsabschnitts oder des zweiten Verbindungsabschnitts eine Positionierausnehmung (351) ist, der andere ein Positionierzapfen (361) ist und der Positionierzapfen (361) in die Positionierausnehmung (351) eingesetzt ist.

4. Transfervorrichtung (100) nach Anspruch 3, wobei eine Außenfläche des Positionierzapfens (361) mit einem Schnappvorsprung (3611) versehen ist, eine Innenumfangsfläche der Positionierausnehmung (351) mit einer Schnappnut versehen ist, und der Schnappvorsprung (3611) beim Einsetzen des Positionierzapfens (361) in die Positionierausnehmung (351) mit der Schnappnut verrastet ist.

5. Transfervorrichtung (100) nach einem der Ansprüche 1-4, wobei der erste Stützabschnitt eine erste Stufenstruktur (362) umfasst und die erste Stufenstruktur (362) dem zweiten Positionierblock (44) zugewandt ist und mit einer ersten Stufenfläche (363) versehen ist, die dazu ausgelegt ist, das zu übertragende Teil zu stützen; und
der zweite Stützabschnitt eine zweite Stufenstruktur umfasst und die zweite Stufenstruktur dem ersten Positionierblock (36) zugewandt ist und mit einer zweiten Stufenfläche versehen ist, die dazu ausgelegt ist, das zu übertragende Teil zu stützen.

6. Transfervorrichtung (100) nach einem der Ansprüche 1-5, wobei der Positioniergetriebemechanismus ferner umfasst: eine erste Begrenzungsanordnung (60), eine zweite Begrenzungsanordnung (70) und eine zweite Antriebsanordnung (80), die mit der ersten Begrenzungsanordnung (60) verbunden ist, wobei die erste Begrenzungsanordnung (60) und die zweite Begrenzungsanordnung (70) auf zwei gegenüberliegenden Seiten der Positionierplattform (20) in einem Abstand in einer zweiten Richtung in der Horizontalebene angeordnet sind, und die zweite Antriebsanordnung (80) dazu ausgelegt ist, die erste Begrenzungsanordnung (60) anzutreiben, um sich in einer Richtung zur zweiten Begrenzungsanordnung (70) hin oder von dieser weg zu bewegen, sodass die erste Begrenzungsanordnung (60) und die zweite Begrenzungsanordnung (70) zusammenwirken, um das zu übertragende Teil zu klemmen; und die zweite Richtung senkrecht zur ersten Richtung verläuft.

7. Getriebevorrichtung (100) nach Anspruch 6, wobei die zweite Antriebsanordnung (80) umfasst:
ein zweites Antriebselement; und
eine zweite Getriebeanordnung, die mit dem zweiten Antriebselement und der ersten Begrenzungsanordnung (60) verbunden ist, wobei das zweite Antriebselement dazu ausgelegt ist, die zweite Getriebeanordnung zur Bewegung anzutreiben, um so die erste Begrenzungsanordnung (60) anzutreiben, um sich in Richtung zur zweiten Begrenzungsanordnung (70) hin oder von dieser weg zu bewegen.

8. Transfervorrichtung (100) nach Anspruch 7, wobei die zweite Getriebeanordnung umfasst:
eine zweite Gewindespindel (81), die sich in der zweiten Richtung erstreckt; und
ein drittes spiralförmiges Getriebeelement (82), das mit der zweiten Gewindespindel (81) in Gewindeverbindung steht und mit der ersten Begrenzungsanordnung (60) verbunden ist, wobei, wenn das zweite Antriebselement die zweite Gewindespindel (81) zum Drehen antreibt, das dritte spiralförmige Getriebeelement (82) dazu ausgelegt ist, sich entlang der zweiten Gewindespindel (81) hin- und herzubewegen, um die erste Begrenzungsanordnung (60) zum Bewegen in der Richtung zu oder weg von der zweiten Begrenzungsanordnung (70) anzutreiben.

9. Transfervorrichtung (100) nach Anspruch 8, wobei die erste Begrenzungsanordnung (60) umfasst:
eine fünfte Gleitschiene (61) und eine sechste Gleitschiene (62), die auf zwei Seiten der zweiten Gewindespindel (81) angeordnet sind und sich in der zweiten Richtung erstrecken;
einen fünften Gleitblock (63) und einen sechsten Gleitblock (64), die mit der fünften Gleitschiene (61) bzw. der sechsten Gleitschiene (62) in Gleitverbindung stehen;
eine dritte Verbindungsplatte (65), die mit dem fünften Gleitblock (63), dem sechsten Gleitblock (64) und dem dritten spiralförmigen Getriebeelement (82) verbunden ist; und
mindestens ein erster Begrenzungsblock (66), der an der dritten Verbindungsplatte (65) angeordnet ist und zum Anliegen an dem zu übertragenden Teil ausgebildet ist.

10. Transfervorrichtung (100) nach Anspruch 9, wobei die zweite Begrenzungsanordnung (70) umfasst:
eine vierte Verbindungsplatte (71), die parallel zur dritten Verbindungsplatte (65) ist, wobei die vierte Verbindungsplatte (71) und die dritte Verbindungsplatte (65) in einem Abstand auf der Positionierplattform (20) angeordnet sind; und
mindestens ein zweiter Begrenzungsblock (72), der an der vierten Verbindungsplatte (71) angeordnet ist und zum Anliegen an dem zu übertragenden Teil ausgebildet ist.

11. Transfervorrichtung (100) nach einem der Ansprüche 1 bis 10, wobei der Tragrahmen (11) mit einem Positionierstift (111) versehen ist, die Positionierplattform (20) mit einer zum Positionierstift (111) passenden Lagerführungsbuchse (21) versehen ist, und der Positionierstift (111) in die Lagerführungsbuchse (21) eingesetzt ist;
und/oder
ferner umfassend: eine Griffstange (22), die an einem Ende der Positionierplattform (20) angeordnet ist.

## Revendications

1. Dispositif de transfert (100), comprenant :
un véhicule guidé automatisé (10), qui est pourvu d'un cadre de support (11) ;
une plate-forme de positionnement (20), qui est agencée sur le cadre de support (11) ; et
un mécanisme de transmission de positionnement, qui comprend un premier ensemble de verrouillage (30), un second ensemble de verrouillage (40), et un premier ensemble d'entraînement (50) raccordée au premier ensemble de verrouillage (30) et au second ensemble de verrouillage (40), dans lequel le premier ensemble de verrouillage (30) et le second ensemble de verrouillage (40) sont agencés sur deux côtés opposés de la plate-forme de positionnement (20) à un intervalle dans une première direction dans un plan horizontal, et le premier ensemble d'entraînement (50) est configuré pour entraîner le premier ensemble de verrouillage (30) et le second ensemble de verrouillage (40) pour qu'ils se meuvent l'un vers l'autre ou en éloignement l'un de l'autre, de manière telle que le premier ensemble de verrouillage (30) et le second ensemble de verrouillage (40) coopèrent pour fixer une pièce destinée à être transférée ;
dans lequel le premier ensemble d'entraînement (50) comprend :
un premier élément d'entraînement ; et
un premier ensemble de transmission, qui est raccordé au premier élément d'entraînement et est raccordé au premier ensemble de verrouillage (30) et au second ensemble de verrouillage (40), respectivement, dans lequel le premier élément d'entraînement est configuré pour entraîner le premier ensemble de transmission pour qu'il se meuve, afin d'entraîner le premier ensemble de verrouillage (30) et le second ensemble de verrouillage (40) pour qu'ils se meuvent l'un vers l'autre ou en éloignement l'un de l'autre ;
dans lequel le premier ensemble de transmission comprend :
une première vis mère (51), qui est raccordée au premier élément d'entraînement, dans lequel la première vis mère (51) s'étend dans la première direction, deux extrémités de la première vis mère (51) sont pourvues d'un premier filet et d'un second filet, respectivement, et le premier filet et le second filet sont agencés dans des directions opposées ; et
un premier élément de transmission en spirale (52) et un deuxième élément de transmission en spirale, dans lequel le premier élément de transmission en spirale (52) est en raccord fileté avec le premier filet, le deuxième élément de transmission en spirale est en raccord fileté avec le second filet, le premier élément de transmission en spirale (52) est raccordé au premier ensemble de verrouillage (30), le deuxième élément de transmission en spirale est raccordé au second ensemble de verrouillage (40), et, lorsque la première vis mère (51) tourne, le premier élément de transmission en spirale (52) et le deuxième élément de transmission en spirale sont adaptés pour se mouvoir l'un vers l'autre ou en éloignement l'un de l'autre le long de la première vis mère (51) ; **caractérisé en ce que** le premier ensemble de verrouillage (30) comprend :
un premier rail de coulissement (31) et un deuxième rail de coulissement (32), qui sont agencés sur deux côtés de la première vis mère (51) et s'étendent dans la première direction ;
un premier bloc de coulissement (33) et un deuxième bloc de coulissement (34), qui sont en raccordement coulissant avec le premier rail de coulissement (31) et le deuxième rail de coulissement (32), respectivement ;
une première plaque de raccordement (35), qui est raccordée au premier bloc de coulissement (33), au deuxième bloc de coulissement (34), et au premier élément de transmission en spirale (52) ; et au moins un premier bloc de positionnement (36), qui est agencé sur la première plaque de raccordement (35), dans lequel un haut du premier bloc de positionnement (36) est pourvu d'une première partie de support configurée pour serrer la pièce destinée à être transférée ;
dans lequel le second ensemble de verrouillage (40) comprend :
un troisième rail de coulissement (41) et un quatrième rail de coulissement (42), qui sont agencés sur deux côtés de la première vis mère (51) et s'étendent dans la première direction ;
un troisième bloc de coulissement et un quatrième bloc de coulissement, qui sont en raccordement coulissant avec le troisième rail de coulissement (41) et le quatrième rail de coulissement (42), respectivement ;
une deuxième plaque de raccordement (43), qui est raccordée au troisième bloc de coulissement, au quatrième bloc de coulissement, et au deuxième élément de transmission en spirale ; et
au moins un second bloc de positionnement (44), qui est agencé sur la deuxième plaque de raccordement (43), dans lequel un haut du second bloc de positionnement (44) est pourvu d'une seconde partie de support, et la première partie de support et la seconde partie de support sont configurées pour coopérer pour fixer la pièce destinée à être transférée ; et
dans lequel deux extrémités de la première plaque de raccordement (35) et deux extrémités de la deuxième plaque de raccordement (43) sont toutes pourvues de premiers galets (352) et de seconds galets (353), et les premiers galets (352) et les seconds galets (353) sont en raccordement de roulement avec la plate-forme de positionnement (20).

2. Dispositif de transfert (100) selon la revendication 1, dans lequel, dans une seconde direction perpendiculaire à la première direction dans le plan horizontal, une pluralité de premières parties de raccordement sont agencées sur la première plaque de raccordement (35) et la deuxième plaque de raccordement (43) à des intervalles, des bas du premier bloc de positionnement (36) et du second bloc de positionnement (44) sont pourvus de secondes parties de raccordement, et les premières parties de raccordement sont en raccordement amovible avec les secondes parties de raccordement.

3. Dispositif de transfert (100) selon la revendication 2, dans lequel une de la premier partie de raccordement et de la seconde partie de raccordement est un évidement de positionnement (351), l'autre est une colonne de positionnement (361), et la colonne de positionnement (361) est insérée dans l'évidement de positionnement (351).

4. Dispositif de transfert (100) selon la revendication 3, dans lequel une surface extérieure de la colonne de positionnement (361) est pourvue d'une saillie d'ajustement à encliquetage (3611), une surface circonférentielle intérieure de l'évidement de positionnement (351) est pourvue d'une rainure d'ajustement à encliquetage, et, lorsque la colonne de positionnement (361) est insérée dans l'évidement de positionnement (351), la saillie d'ajustement à encliquetage (3611) est en ajustement à encliquetage avec la rainure d'ajustement à encliquetage.

5. Dispositif de transfert (100) selon l'une quelconque des revendications 1 à 4, dans lequel la première partie de support comprend une première structure d'épaulement (362), et la première structure d'épaulement (362) fait face au second bloc de positionnement (44) et est pourvue d'une première surface d'épaulement (363) configurée pour supporter la pièce destinée à être transférée ; et
la seconde partie de support comprend une seconde structure d'épaulement, et la seconde structure d'épaulement fait face au premier bloc de positionnement (36) et est pourvue d'une seconde surface d'épaulement configurée pour supporter la pièce destinée à être transférée.

6. Dispositif de transfert (100) selon l'une quelconque des revendications 1 à 5, dans lequel le mécanisme de transmission de positionnement comprend en outre : un premier ensemble de limitation (60), un second ensemble de limitation (70), et un second ensemble d'entraînement (80) raccordée au premier ensemble de limitation (60), dans lequel le premier ensemble de limitation (60) et le second ensemble de limitation (70) sont agencés sur deux côtés opposés de la plate-forme de positionnement (20) à un intervalle dans une seconde direction dans le plan horizontal, et le second ensemble d'entraînement (80) est configuré pour entraîner le premier ensemble de limitation (60) pour qu'il se meuve dans une direction vers le second ensemble de limitation (70), ou en éloignement de celui-ci, de manière telle que le premier ensemble de limitation (60) et le second ensemble de limitation (70) coopèrent pour serrer la pièce destinée à être transférée ; et
la seconde direction est perpendiculaire à la première direction.

7. Dispositif de transfert (100) selon la revendication 6, dans lequel le second ensemble d'entraînement (80) comprend :
un second élément d'entraînement ; et
un second ensemble de transmission, qui est raccordé au second élément d'entraînement et au premier ensemble de limitation (60), dans lequel le second élément d'entraînement est configuré pour entraîner le second ensemble de transmission pour qu'il se meuve, afin d'entraîner le premier ensemble de limitation (60) pour qu'il se meuve dans la direction vers le second ensemble de limitation (70), ou en éloignement de celui-ci.

8. Dispositif de transfert (100) selon la revendication 7, dans lequel le second ensemble de transmission comprend :
une seconde vis mère (81), qui s'étend dans la seconde direction ; et
un troisième élément de transmission en spirale (82), qui est en raccord fileté avec la seconde vis mère (81), et est raccordé au premier ensemble de limitation (60), dans lequel, lorsque le second élément d'entraînement entraîne la seconde vis mère (81) pour qu'elle tourne, le troisième élément de transmission en spirale (82) est adapté pour se déplacer en va-et-vient le long de la seconde vis mère (81), afin d'entraîner le premier ensemble de limitation (60) pour qu'il se meuve dans la direction vers le second ensemble de limitation (70), ou en éloignement de celui-ci.

9. Dispositif de transfert (100) selon la revendication 8, dans lequel le premier ensemble de limitation (60) comprend :
un cinquième rail de coulissement (61) et un sixième rail de coulissement (62), qui sont agencés sur deux côtés de la seconde vis mère (81) et s'étendent dans la seconde direction ;
un cinquième bloc de coulissement (63) et un sixième bloc de coulissement (64), qui sont en raccordement coulissant avec le cinquième rail de coulissement (61) et le sixième rail de coulissement (62), respectivement ;
une troisième plaque de raccordement (65), qui est raccordée au cinquième bloc de coulissement (63), au sixième bloc de coulissement (64), et au troisième élément de transmission en spirale (82) ; et
au moins un premier bloc de limitation (66), qui est agencé sur la troisième plaque de raccordement (65), et est configuré pour venir en butée contre la pièce destinée à être transférée.

10. Dispositif de transfert (100) selon la revendication 9, dans lequel le second ensemble de limitation (70) comprend :
une quatrième plaque de raccordement (71), qui est parallèle à la troisième plaque de raccordement (65), dans lequel la quatrième plaque de raccordement (71) et la troisième plaque de raccordement (65) sont agencées sur la plate-forme de positionnement (20) à un intervalle ; et
au moins un second bloc de limitation (72), qui est agencé sur la quatrième plaque de raccordement (71), et est configuré pour venir en butée contre la pièce destinée à être transférée.

11. Dispositif de transfert (100) selon l'une quelconque des revendications 1 à 10, dans lequel le cadre de support (11) est pourvu d'une goupille de positionnement (111), la plate-forme de positionnement (20) est pourvue d'une douille de guidage de butée (21) correspondant à la goupille de positionnement (111), et la goupille de positionnement (111) est insérée dans la douille de guidage de butée (21) ;
et/ou
comprenant en outre : une barre de manipulation (22), qui est agencée à une extrémité de la plate-forme de positionnement (20).
